# EUROPEAN PATENT APPLICATION

(11) **EP 3 489 875 A1**
(43) Date of publication of application: **29.05.2019**
(21) Application number: 17203793.9
(22) Date of filing: 27.11.2017
(51) Int. Cl.: G06Q 20/06, G06Q 20/36, G06Q 20/38

(54) **DEVICE FOR PAYMENT OF VEHICLE BASED COSTS, A RESPECTIVE VEHICLE AND A RESPECTIVE METHOD**

(71) Applicant: Bayerische Motoren Werke Aktiengesellschaft, 80809 München (DE)
(72) Inventor: Bhattacharya, Rahul, 89231 Neu Ulm (DE)

(57) **Abstract**

It is described a device (100) for payment of vehicle based costs, comprising: an amount of payment specification unit (110), for specifying a first amount of payment (11) in an initial currency (12) for a liable-to-pay-costs vehicle based action of the vehicle (200); a payment recipient specification unit (120), for specifying a recipient (21) of the first amount of payment (11); an user currency specification unit (130), for specifying an user-based currency (31) for an user of the vehicle (200); and an opportune currency determination device (140), for determining an opportune currency (41), wherein the currency determination device (140) is adapted for: determining (40) the opportune currency (41), based on an opportunity criterion (42), wherein the opportunity criterion (42) comprises a minimization of monetary costs for the first amount of payment (11), based on the user-based currency (31), and wherein determining (40) the opportune currency (41) is further based on a set of currency-based cost parameters (43), the opportune currency (41) comprising a decentralized and distributed digital ledger hash-tree currency; and determining (50) a second amount of payment (51) based on the first amount of payment (11), wherein the second amount of payment (51) is accounted in the opportune currency (41); and a payment unit (150), for paying (60) of the second amount of payment (51) to the recipient (21) of the first amount of payment (11).

## Description

The present invention relates to the field of devices for use in vehicles.

In order to allow for a vehicle based payment, users have to have valid bank accounts or third party validation for their monetary wealth, either through a credit card or a bank account. For people without a bank backup, even if they have cash, it will not allow for using services like DriveNow, which requires an explicit "third party" bank to validate transactions before renting cars. Having a PayPal account also does not help much, as transaction costs are herby paid at least by the receiver of the payment and as the receiver of the payment may put on top of the payment he wants to receive for his service.

Therefore, there may be a need for a device, which allows for payment of vehicle based costs in a currency that is most convenient to the user of the vehicle in a dynamic currencies system, without paying bank transaction fees and/or which may provide at least one other advantage over the current state of the art.

This need may be met by the subject matter according to the independent claims. Advantageous embodiments of the present invention are described by the dependent claims.

According to a first aspect of the invention there is provided a device for payment of vehicle based costs, the device comprising: an amount of payment specification unit, for specifying a first amount of payment in an initial currency for a liable-to-pay-costs vehicle based action of the vehicle; a payment recipient specification unit, for specifying a recipient of the first amount of payment; an user currency specification unit, for specifying an user-based currency for an user of the vehicle; and an opportune currency determination device, for determining an opportune currency. Therein, the currency determination device is adapted for: determining the opportune currency, based on an opportunity criterion, wherein the opportunity criterion comprises a minimization of monetary costs for the first amount of payment, based on the user-based currency, and wherein determining the opportune currency is further based on a set of currency-based cost parameters, the opportune currency comprising a decentralized and distributed digital ledger hash-tree currency; and determining a second amount of payment based on the first amount of payment, wherein the second amount of payment is accounted in the opportune currency. And the device for payment of vehicle based costs moreover comprises a payment unit, for paying of the second amount of payment to the recipient of the first amount of payment.

An amount of payment specification unit according to the invention may comprise an electronic unit, which is able to specify how much has to be paid for an used service of the vehicle respectively of the user of the vehicle. For example such a service may be an use of a parking lot, an use of a car sharing vehicle, a maintenance of the vehicle, an refuelling of the vehicle and the like. Therefore, any service in conjunction with a vehicle used by an user of the vehicle, may be a service, for which the amount of payment specification unit may specify the amount of money that has to be paid for the use of the respective service.

This means the amount of payment specification unit ma comprise tools for getting such payment information on certain services, for example by communicating with a backbone of the respective service provider or a general backbone, where such services and the corresponding fees are listed. Such a amount of payment specification unit may also comprise means for identifying respectively "reading" service fee costs of a service. The amount of payment specification unit may - in a preferred embodiment - comprise means for an use of a car2x communication protocol. With this such service fees may directly be sent to the vehicle via the amount of payment specification unit.

A payment recipient specification unit according to the invention may be an electronic unit that comprises means for specifying the recipient of the service fee. For example this may be a local authority, a car manufacturer, a vehicle repair shop owner, a fuel station owner and the like. The payment recipient specification unit may therefore comprise similar or also the same means as the amount of payment specification unit. Both units, the amount of payment specification unit and the payment recipient specification unit may be part of the same device for allowing such communication respectively such information reception as elaborated before.

An user currency specification unit according to the invention may comprise means for identifying or storing the standard currency used by the user of the vehicle. For example an user from US may use as standard currency US dollars, whereas a vehicle user from within the EU may use the EURO currency as his standard currency. The simplest way is may be an interface for asking the user about his standard used currency and to store this information as the user currency.

An opportune currency determination device according to the invention may comprise means for determining the best currency for use of the payment of the service. Such a best currency may be the currency, which causes the least costs for the user, taking in account his user currency and related fees together with the use of the user currency.

The opportune currency determination device may comprise a set of decentralized and distributed digital ledger hash-tree currencies, in order to allow for the determination of the best currency to use for the payment.

An user of the vehicle according to the invention may be for example the owner of the vehicle. The user of the vehicle may also be the user of a rented or borrowed vehicle. In any case, the user of the vehicle may be the person responsible during the phase of use of the billable service used by the respective vehicle.

An opportunity criterion according to the invention may comprise a criterion, which allows for determining the above mentioned opportune currency.

Currency-based cost parameters according to the invention may comprise comprises one or more information about charges and/or discounts in conjunction with the available decentralized and distributed digital ledger hash-tree currencies.

A decentralized and distributed digital ledger hash-tree currency according to the invention may serve as a value-exchange protocol. Therefore, it may be used to record transactions across many computers so that the record cannot be altered retroactively without the alteration of all subsequent blocks and the collusion of the network. This allows the participants to verify and audit transactions inexpensively. They are authenticated by mass collaboration powered by collective self-interests. The result is a robust workflow where participant's uncertainty regarding data security is marginal. The use of a blockchain as a decentralized and distributed digital ledger hash-tree currency removes the characteristic of infinite reproducibility from a digital asset. It confirms that each unit of value was transferred only once, solving the long-standing problem of double spending. Blockchains have been described as a value-exchange protocol. This blockchain-based exchange of value can be completed more quickly, more safely and more cheaply than with traditional systems. A blockchain can assign title rights because it provides a record that compels offer and acceptance. A blockchain database consists of two kinds of records: transactions and blocks. Blocks hold batches of valid transactions that are hashed and encoded into a Merkle tree. Each block includes the hash of the prior block in the blockchain, linking the two. Variants of this format were used previously, for example in Git. The format is not by itself sufficient to qualify as a blockchain. The linked blocks form a chain. This iterative process confirms the integrity of the previous block, all the way back to the original genesis block. Some blockchains create a new block as frequently as every some seconds.

A determining a second amount of payment according to the invention may comprise a transferring calculating of the first amount of payment in the initial currency, into a second amount of payment in the opportune currency.

A transferring calculating according to the invention may comprise a swap between two currencies, for example by use of an exchange rate. Such exchange rates may be freely fluctuating exchange rates. Moreover, they may comprise agio and disagio on the exchange, may it be through an exchange provider or the receiver of the payment, for example for promoting a special kind of decentralized and distributed digital ledger hash-tree currency or for making it more unattractive to make payments in a special kind of decentralized and distributed digital ledger hash-tree currency, for example because of too high fluctuations in its wealth compared to the origin currency of payment.

A payment unit according to the invention may comprise means for a transaction of an amount of money, respectively amount of wealth, in the opportune currency. Such a payment unit may moreover comprise means for billing the payment to an account of the user of the vehicle.

The device for payment of vehicle based costs may be adapted to allow for an automated payment for an autonomous driving vehicle. For example the autonomous driving car of the user may drive itself to a fuel station and refuel itself and conduct the payment of the refuelling automatically for the user of the vehicle.

This aspect of the invention is based on the idea that it may be advantageous to provide a flexible payment opportunity for users of vehicles, that is fair to different kind of users of the same service, so that a first user using a local currency and a second user using a 'foreign' currency may be charged the same amount from their account, without the need of bank transfer fees.

According to a further aspect of the invention there is provided a method for a payment of vehicle based costs, the method comprising: determining a first amount of payment for a liable-to-pay-costs vehicle based action, wherein the first amount of payment is accounted in an initial currency; determining a recipient of the first amount of payment; determining an user-based currency for an user of the vehicle; and determining an opportune currency, for the first amount of payment. Therein, determining the opportune currency is based on an opportunity criterion, wherein the opportunity criterion is a minimization of monetary costs for the first amount of payment, based on the user-based currency. Therein, determining the opportune currency is further based on a set of currency-based cost parameters. And therein, the opportune currency comprises a decentralized and distributed digital ledger hash-tree currency. The method moreover comprises: calculating a second amount of payment based on the first amount of payment, wherein the second amount of payment is accounted in the opportune currency; paying of the second amount of payment to the recipient of the first amount of payment; and billing the second amount of payment to a currency account of the user.

A currency account of the user according to the invention may be a bank account of the user as well as a portfolio account.

Some or all steps of the method may be executed in an automated way by means for automatisation such as computer means.

This aspect of the invention is based on the idea that it may be advantageous to provide a flexible payment opportunity for users of vehicles, that is fair to different kind of users of the same service, so that a first user using a local currency and a second user using a 'foreign' currency may be charged the same amount from their account, without the need of bank transfer fees.

According to a further aspect of the invention there is provided a vehicle, comprising a device for payment of vehicle based costs of the vehicle, according to the invention.

This aspect of the invention is based on the idea that it may be advantageous to provide a flexible payment opportunity for users of vehicles, that is fair to different kind of users of the same service, so that a first user using a local currency and a second user using a 'foreign' currency may be charged the same amount from their account, without the need of bank transfer fees.

According to a further aspect of the invention there is provided a computer program product, comprising machine readable instructions stored on machine readable media, for a device and/or for a vehicle according to the invention.

According to a further aspect of the invention there is provided a machine readable media comprising a computer program product according to the invention.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

According to a first embodiment of the invention, determining the opportune currency is based on an objective function, wherein the objective function comprises the opportunity criterion as an objective parameter and the set of currency-based cost parameters and a set of decentralized and distributed digital ledger hash-tree currencies as input parameters.

For this, the opportune currency determination device may comprise and/or use means for communication with a backend for getting information about such banking fees applying for payment with the user currency for the first amount of payment in the origin currency in which the service fee is charged.

A set of decentralized and distributed digital ledger hash-tree currencies according to the invention may comprises at least two different kind of decentralized and distributed digital ledger hash-tree currencies.

This embodiment of the invention is based on the idea that it may be advantageous to provide a even more precise determination of the opportunity currency that has to be used, in order to achieve the least costs for the user of the vehicle.

According to a further embodiment of the invention, the device moreover comprises a recipient information reception unit, for receiving an adaptation information from the recipient of the first amount of payment. Therein, the adaptation information comprises an input parameter for the objective function, for adaptation of at least one distributed digital ledger hash-tree currency from the set of decentralized and distributed digital ledger hash-tree currencies.

This embodiment of the invention is based on the idea that it may be advantageous to provide the possibility of allowing an recipient of the payment to apply agio and/or disagio on the set of decentralized and distributed digital ledger hash-tree currencies, in order to represent a malus or bonus he may receive by use of a certain decentralized and distributed digital ledger hash-tree currency for the payment of his provided service or services.

According to a further embodiment of the invention, the objective function comprises an optimization function, preferably based on a cost minimization optimization function.

This embodiment of the invention is based on the idea that it may be advantageous to provide a numerical tool, in order to achieve a minimization of costs for the user of the vehicle.

According to a further embodiment of the invention, the recipient of the first amount of payment is at least part of a node of the decentralized and distributed digital ledger hash-tree currency of the opportune currency.

This embodiment of the invention is based on the idea that it may be advantageous for the receiver of the payment as well as the user of the vehicle as the one who will be charged for the payment, that the receiver of the payment is part of the node and thus is a trusted part of the decentralized and distributed digital ledger hash-tree currency of the opportune currency chain.

According to a further embodiment of the invention, the paying of the second amount of payment to the recipient of the first amount of payment is confirmable by a node of the decentralized and distributed digital ledger hash-tree currency of the opportune currency.

This embodiment of the invention is based on the idea that it may be advantageous to allow for independent instants, who are able to confirm the validity/proof of authenticity of the payment. With this, a manipulation of the payment will be less risky, as with every confirmation from another node of the decentralized and distributed digital ledger hash-tree currency of the opportune currency, the probability of a possible manipulation will be significantly smaller.

According to a further embodiment of the invention, the device is an embedded device, optimized for a use in an electrical energy minimized vehicle environment.

This embodiment of the invention is based on the idea that it may be advantageous to provide a device specialized to its environment, in order to allow for dealing to the special restrictions the environment has. As in the automotive environment there are a lot of different kind of special requirements to devices used in this area.

According to a further embodiment of the invention, the opportune currency determination device comprises a computing unit, optimized for a quick and reliable computing for determining the opportune currency.

This embodiment of the invention is based on the idea that it may be advantageous to provide a quick possibility to find the best solution for the currency to be used for payment.

According to a further embodiment of the invention, the computing unit is moreover optimized for a low electrical energy consumption.

This embodiment of the invention is based on the idea that it may be advantageous to provide a possibility for determining the best solution for the currency to be used for payment without wasting electrical energy, as electrical energy consumption will be more and more crucial in future vehicle, like electrical driven cars and the like.

According to a further embodiment of the invention, the device moreover comprises an user interface unit, for interaction of the user of the vehicle with the device for payment of vehicle based costs.

This embodiment of the invention is based on the idea that it may be advantageous to provide a possibility to allow the user of the vehicle to communicate with the device, in order to give in some crucial parameters, like his own standard used currency and/or preferences he may have regarding the one or the other decentralized and distributed digital ledger hash-tree currency of the opportune currency from the set of decentralized and distributed digital ledger hash-tree currency of the opportune currencies.

According to a further embodiment of the invention, the device moreover comprises a mobile data connection unit, for connecting the device for payment of vehicle based costs with a backend comprising decentralized and distributed digital ledger hash-tree currency information and/or a backend of the recipient of the first amount of payment.

This embodiment of the invention is based on the idea that it may be advantageous to use a mobile data connection in order to achieve the needed information and parameters used for determining the opportune currency. In new produced vehicles such mobile data connections are provided by a SIM-card by the manufacturer of the vehicle, in order to allow for manufacturer based services as well as emergency services in case of an occurring emergency situation. So with this, further cost for an own data connection device may be reduced.

According to a further embodiment of the invention, the device allows for an operating temperature from -15 °C to +75 °C, preferably from -25 °C to +85 °C, more preferably from -40 °C to +85 °C, most preferably from -40 °C to +125 °C.

This embodiment of the invention is based on the idea that it may be advantageous to allow for an operation of the device and its units in harsh environment as may be found on hot summer days or frozen winter days.

According to a further embodiment of the invention, the currency account of the user comprises a currency account in the user-based currency, in the opportune currency or in another decentralized and distributed digital ledger hash-tree currency.

This embodiment of the invention is based on the idea that it may be advantageous to allow a billing of the payment on any desired user of the vehicle account and/or portfolio the user of the vehicle may want to have it billed on.

According to a further embodiment of the invention, the decentralized and distributed digital ledger hash-tree currency comprises a blockchain based virtual currency.

This embodiment of the invention is based on the idea that it may be advantageous to allow for an use of already implemented and market-available decentralized and distributed digital ledger hash-tree currencies.

According to a further embodiment of the invention, the device for payment of vehicle based costs in the vehicle may be adapted to allow for an automatic payment of an used service of such a vehicle during an autonomous driving and/or acting modus.

This embodiment of the invention is based on the idea that it may be advantageous that, as autonomous driving vehicles will enter the market in the near future, such autonomous driving vehicles will be able to pay for their used services without a needed interaction of the user of the vehicle.

To recapitulate: Actually, users have to have valid bank accounts or third party validation for their monetary wealth, either through a credit card or a bank account. For people without a bank backup, even if they have cash, will not allow for using services like DriveNow, which requires an explicit "third party" bank to validate transactions before renting cars. The problems of such "third party" transactions are as follows:
1. Users need to have a previous account to use these "third party" banks.
2. It is centralized and there is no transparency for the account.
3. There has to be a valid connection to use these services. This results in issues if the banking system is down or unreachable.
4. Often there are transaction fees involved to use such services.
5. These third party are responsible for the transaction part only and cannot be used to validate extra information like valid driving license, criminal record or visa status, especially for foreign tourists.
6. It is not fair, especially for foreign currency transactions. There is a processing fee involved when there is a currency conversion from one currency to another.
7. It is not always secure and can often lead to security hacks.
8. Transactions using PayPal or credit card are often deducted at the end of the billing time, in a statement and hence can lead to discrepancies. Also there is no immediate notification of the transaction, for users to challenge or validate the transaction.
9. Getting a receipt or a confirmation of the transaction is not immediate and requires some tracking on the user part to get it after sometime.

The idea is to establish a decentralized and distributed digital ledger hash-tree currency enabled service in vehicles, for example in car sharing vehicles like the ConnectedNow cars, wherein the car uses a backend to connect to a distributed network to validate the transaction and hence gives better visibility and instant transaction conformation.

Herein, the payment is made between the user using his e-wallet, for example in a smartphone, and the car. The car then forwards this transaction details to its backend, where the blockchain is running and tries to validate the transaction. The transaction is validated in the backend blockchain and the notification of the transaction is automatically and instantly sent to the user. The user can validate this transaction, while still inside the car and with a distributed blockchain network can use this transaction, which is now a part of the "chain" in the blockchain for future references like reimbursements. Since, the validation happens in a distributed blockchain, using cryptographic keys, it is secure and there is no single point of failure. The customer has better customer satisfaction, as the payment and the confirmation of the payment happens while he is still in the car and not in a later point of time, when it comes as a statement at the end of the billing cycle, where the previous transactions are shown. Even if instant electronic payments are made available to users, while still in the car, there is a chance that, since these transactions have to be validated and confirmed by "third party", the connection fails or times out. In such a situation, it is no longer possible to make the payment and it would require multiple retries from the customer. Also, it might happen that those particular "third party" banks are not supported to be a valid payment option. For foreign currency exchanges, the situation is more complicated and requires more validation and a conversion of currency. This might be a bad financial investment for user, as the exchange rate depends on the current stock market fluctuations and often requires extra hidden fees, which effectively increases the price of the commodity. This problem is not mediated even in current e-payment solutions like PayPal, where the price of the commodity is often in "local" currency and someone with foreign bank accounts has to still pay for the "hidden currency exchange fees", thus making the system "unfair" for foreign users, as they are now paying effectively more than local users for the same service. PayPal also has restrictions, like ones imposed by "third-party" vendors, to validate that the account is backed by a credit/debit card, which has an international transaction enabled and also comes with a limit on the transaction, which again depends on the decision of the bank.

With the proposed solution, the user is given an unique solution to pay, using any decentralized and distributed digital ledger hash-tree currency. Given that there are some major 20-30 players right now and more to come in the future, a user can use any of the decentralized and distributed digital ledger hash-tree currencies supported by the service provider, which provides the vehicle based service that has to be paid. The car will provide an option for payment using any of the supported decentralized and distributed digital ledger hash-tree currencies, like a blockchain crypto-currency. Depending on the selected crypto-currency by the user, the car will share this info with the backend and the backend will carry out the transaction based on the selected crypto-currency. The unifying factor among them all is the concept of decentralized and distributed digital ledger hash-tree currencies, and its ability to establish identity and ownership, record transactions and enforce smart contracts. As the technology and infrastructure around coins matures, crypto currencies, which provide a genuinely useful solution to a problem could find themselves rapidly increasing in value, just as Bitcoin has done. This makes them very attractive to investors. Some of the following trends in the crypto-currency usage are as follows:
The crypto currency Dash aims to beat Bitcoin both by increasing users, anonymity, and providing additional functions geared towards enabling smart contracts.

Ethereum is another project, which has attracted interest from the financial services industry and offers another platform for smart contracts to be signed and executed in a decentralized and automated way.

Other coins have more specialised or niche applications, online gambling tokens are predictably popular as well as currencies designed to be traded across a large number of online and mobile games.

All these coins attract speculative investment from buyers hoping to get in early on the next Bitcoin, however, any investment in just one coin is going to be extremely high-risk."

Hence people would be having multiple crypto-currencies, depending on their use case and in different amount, depending on the stock market fluctuations and thus giving them an option to use any of the decentralized and distributed digital ledger hash-tree -backed crypto-currency would be very lucrative and would not incur the issue of "unfair" trading, as the value would be same for local as well as foreign users, since there is no currency exchange happening and the rate is fixed, much like if all the world economies used the same fiat currency. Of course, it comes with an additional advantage of being distributed, secure and instant, thus making the payment option lucrative for the user.

Depending on the crypto-currency selected, the car will communicate this info to the backend. The backend, depending on the crypto-currency selected would use the blockchain to validate the transaction and hence complete the transaction instantly. Depending on the lucrative crypto-currencies, like a new blockchain would be cheaper and hence cheaper to invest in the initial period and market trends, discounts could be given to some crypto-currencies, compared to others and would then be a lucrative rebate offer for users/customers having those currencies. This will also help car service providers to have a bigger share of crypto-currencies in its portfolio, which could be used for other payments like car maintenance or car parts purchase. For autonomous vehicles, car-pooling or car-sharing use-cases, an idea of instant secure and distributed payment like the one proposed would help in faster and secure payment for the users, thus making the service lucrative from a customer point of view. For a typical car-pooling scenario, when a car user broadcasts his availability of car seats for a route, it might be beneficial for both parties, the one who owns the car and the one who is using the car-pool, to make a secure instant transaction validating the car-pool service being used. Also, these transactions would be distributed and hence more reliable to succeed and securely distributed over the blockchain network for future references. Such a situation in the current state of the art, would require either a cash payment or a credit card/PayPal payment, which has the issues of being centralized by a "third part" and limited transparency and visibility. In future, if the government gives some "tax break" for people using shared cars instead of private for environmental foot-print reduction, then the current state of the art has no way of validating the transaction. Instead, with a blockchain based payment, these transactions become the part of the chain and hence could be used in the future for making such claims.

Another big advantage of using decentralized and distributed digital ledger hash-tree currencies backed technology is that there could be attributes attached to a transaction. These attributes could be used for customer verification, including valid driving license, age or passport information. The attributes are all private for the user and depending on the scenario, these could be attached to a transaction, thus completing the full transaction. Criminal records or past driving history, could be made as a part of the attribute for better visibility of the transaction. In DriveNow or competing scenarios, the credit card info is required for validation, not only for the monetary part but also for other info like age etc. All++ of these attributes, instead of coming from a centralized closed "third party" like a bank, instead can be made as a part of the transaction as a part of "smart contract". This is not only secure and distributed but also guarantees that the information is correct, because of the nature of the decentralized and distributed digital ledger hash-tree currency. This in turn makes the transaction transparent and since there is no overhead of validating by a central third party, makes it faster and hard to tamper with. Since the decentralized and distributed digital ledger hash-tree currencies technology replicates the data over the network, it is hard for the data to get tampered with and since it is distributed, the chances of the ledger to get lost is minimal compared to "third party" systems like PayPal, which could seize to exist in few years and hence all the history of the transactions would be lost. Same thing would happen with banks, which could go out of business and hence the credit history is lost. This happens because all the transactional history is the part of the "third party" and its lifetime is very much dependent on the third-party. Similar problem does not exist within a decentralized and distributed digital ledger hash-tree currencies, as the data is not bound to one particular centralized authority. Given the fact that decentralized and distributed digital ledger hash-tree currencies come with an financial advantage of "mining", so going forward the backend could use high powered computers to validate and sign the transactions. This would lead to financial gain for the company, which could be shared withe the user. Hence, with a strong backend blockchain mining service, it would lead to financial gain, which could be used to lower the price of the commodity, leading to a better solution for the world. This is more of a self-sustaining business model, as there are financial gains possible, which would lead to better business.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The illustration in the drawing is schematically. It is noted that in different figures, similar or identical elements or features are provided with the same reference signs or with reference signs, which are different from the corresponding reference signs only within the first digit. In order to avoid unnecessary repetitions, elements or features, which have already been elucidated with respect to a previously described embodiment, are not elucidated again at a later position of the description.

The following figures shall assist in a deeper understanding of the claimed invention. Therein the figures show exemplary:
Fig. 1 a schematical illustration of a proposed device according to an exemplary embodiment of the invention;
Fig. 2 a schematical illustration of a proposed device according to a further exemplary embodiment of the invention;
Fig. 3 a schematical illustration of a proposed device according to a further exemplary embodiment of the invention;
Fig. 4 a schematical illustration of a proposed device according to a further exemplary embodiment of the invention;
Fig. 5 a schematical illustration of a proposed vehicle according to a further exemplary embodiment of the invention; and
Fig. 6 a schematical illustration of a proposed method according to a further exemplary embodiment of the invention.

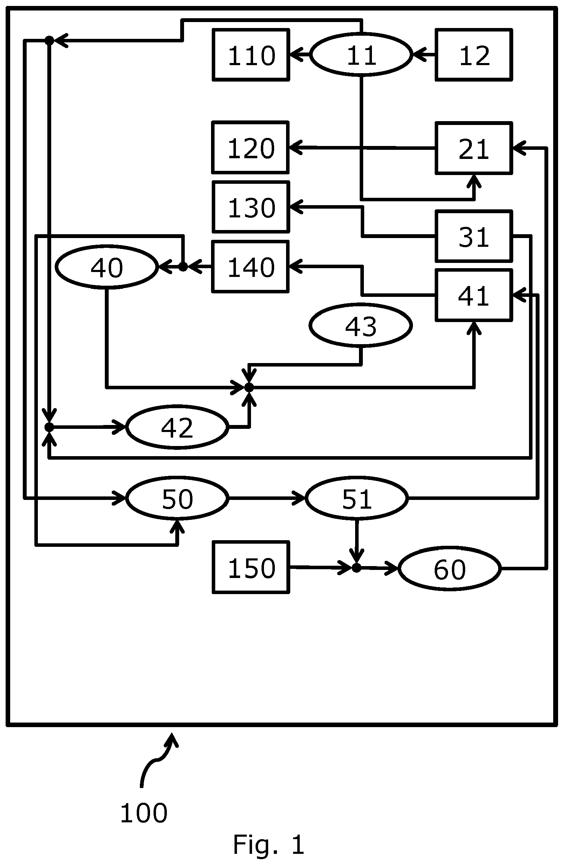

Fig. 1 shows a schematical illustration of a proposed device according to an exemplary embodiment of the invention.

Therein, Fig. 1 shows a device 100 for payment of vehicle based costs, wherein the device 100 comprises: an amount of payment specification unit 110, for specifying a first amount of payment 11 in an initial currency 12 for a liable-to-pay-costs vehicle based action of the vehicle 200 (not shown in Fig. 1); a payment recipient specification unit 120, for specifying a recipient 21 of the first amount of payment 11; an user currency specification unit 130, for specifying an user-based currency 31 for an user of the vehicle 200; an opportune currency determination device 140, for determining an opportune currency 41, wherein the currency determination device 140 is adapted for: determining 40 the opportune currency 41, based on an opportunity criterion 42, wherein the opportunity criterion 42 comprises a minimization of monetary costs for the first amount of payment 11, based on the user-based currency 31, and wherein determining 40 the opportune currency 41 is further based on a set of currency-based cost parameters 43, the opportune currency 41 comprising a decentralized and distributed digital ledger hash-tree currency; and determining 50 a second amount of payment 51 based on the first amount of payment 11, wherein the second amount of payment 51 is accounted in the opportune currency 41. And the device 100 for payment of vehicle based costs moreover comprises a payment unit 150, for paying 60 of the second amount of payment 51 to the recipient 21 of the first amount of payment 11.

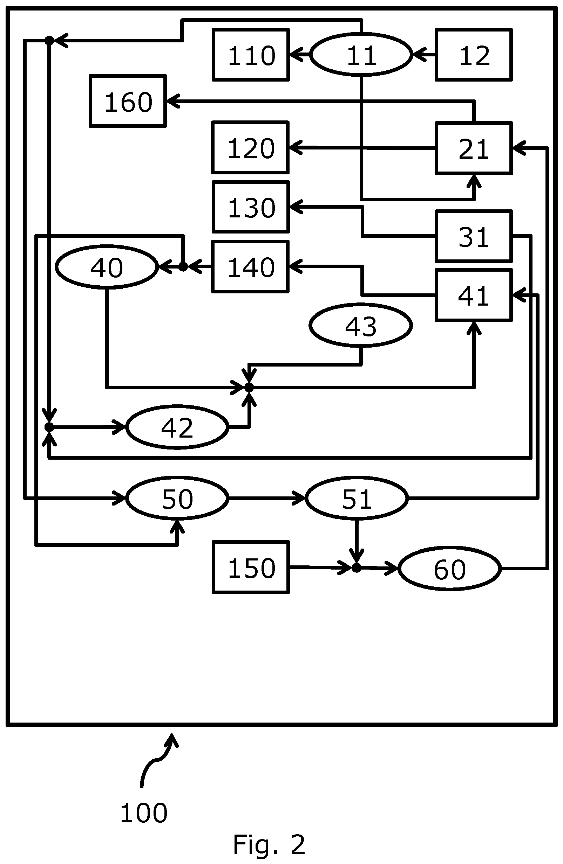

Fig. 2 shows a schematical illustration of a proposed device according to a further exemplary embodiment of the invention.

Fig. 2 shows a device 100 for payment of vehicle based costs, wherein the device 100 moreover comprises a recipient information reception unit 160, for receiving an adaptation information from the recipient 21 of the first amount of payment 11. Therein, the adaptation information comprises an input parameter for the objective function, for adaptation of at least one distributed digital ledger hash-tree currency from the set of decentralized and distributed digital ledger hash-tree currencies.

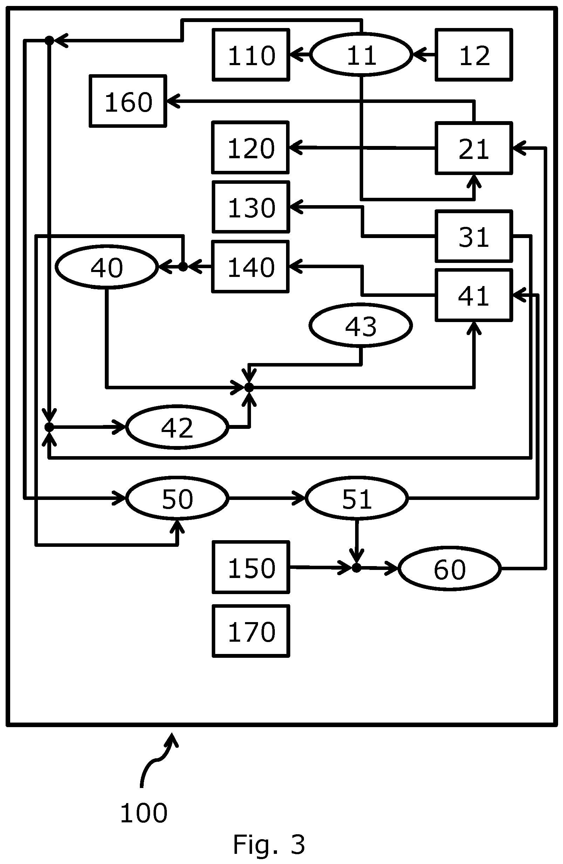

Fig. 3 shows a schematical illustration of a proposed device according to a further exemplary embodiment of the invention.

Fig. 3 shows a device 100 for payment of vehicle based costs, wherein the device 100 moreover comprises an user interface unit 170, for interaction of the user of the vehicle with the device 100 for payment of vehicle based costs.

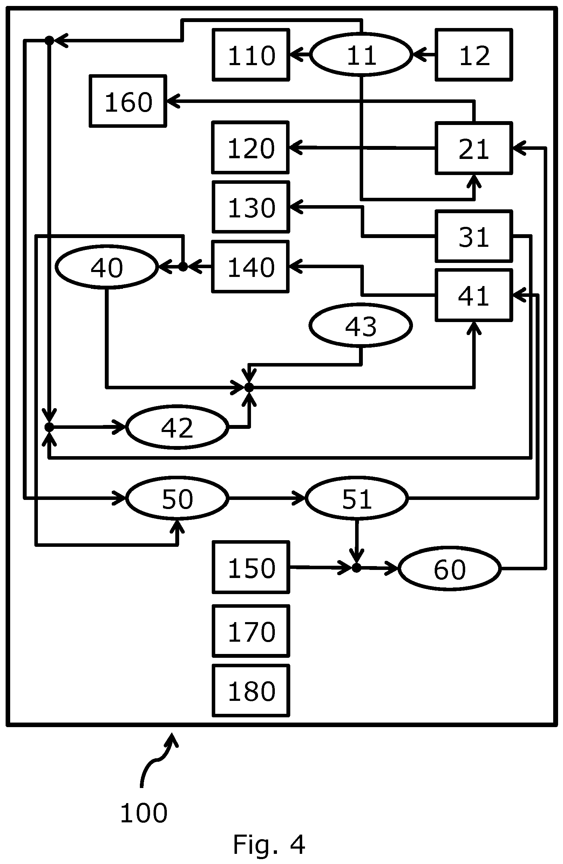

Fig. 4 shows a schematical illustration of a proposed device according to a further exemplary embodiment of the invention.

Fig. 4 shows a device 100 for payment of vehicle based costs, wherein the device 100 moreover comprises a mobile data connection unit 180, for connecting the device 100 for payment of vehicle based costs with a backend comprising decentralized and distributed digital ledger hash-tree currency information and/or a backend of the recipient 21 of the first amount of payment 11.

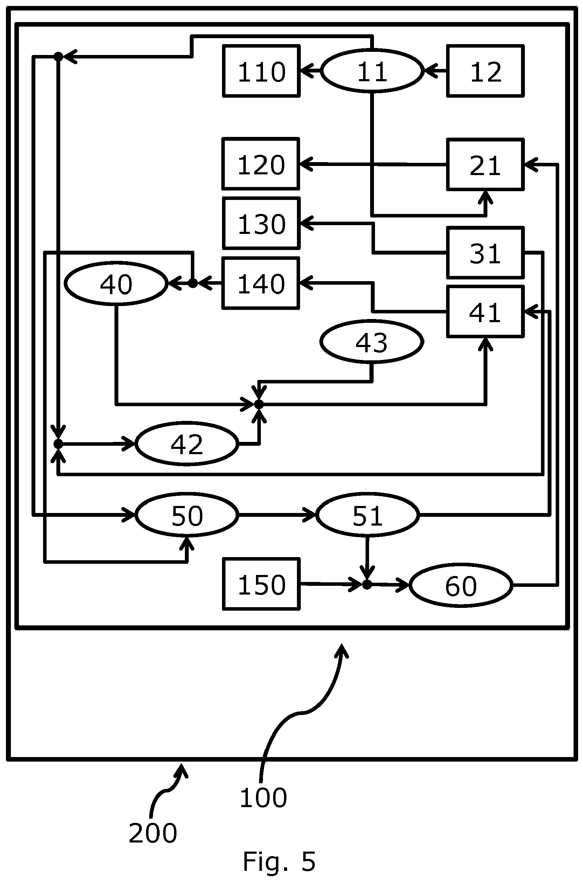

Fig. 5 shows a schematical illustration of a proposed vehicle according to a further exemplary embodiment of the invention.

Fig. 5 shows a vehicle 200 comprising a device 100 for payment of vehicle based costs of the vehicle according to an embodiment of the invention.

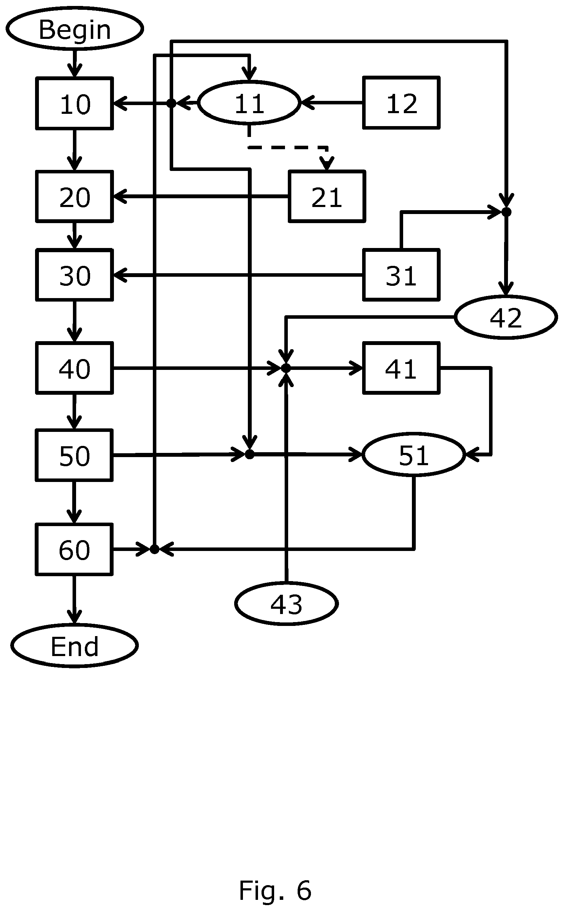

Fig. 6 shows a schematical illustration of a proposed method according to a further exemplary embodiment of the invention.

Fig. 6 shows a method for a payment of vehicle based costs, the method comprising: determining 10 a first amount of payment 11 for a liable-to-pay-costs vehicle based action, wherein the first amount of payment 11 is accounted in an initial currency 12; determining 20 a recipient 21 of the first amount of payment 11; determining 30 an user-based currency 31 for an user of the vehicle 200; and determining 40 an opportune currency 41, for the first amount of payment 11. Therein, determining 40 the opportune currency 41 is based on an opportunity criterion 42, wherein the opportunity criterion 42 is a minimization of monetary costs for the first amount of payment 11, based on the user-based currency 31, wherein determining 40 the opportune currency 41 is further based on a set of currency-based cost parameters 43, and wherein the opportune currency 40 comprises a decentralized and distributed digital ledger hash-tree currency. The method moreover comprises: calculating 50 a second amount of payment 51 based on the first amount of payment 11, wherein the second amount of payment 51 is accounted in the opportune currency 41; and paying 60 of the second amount of payment 51 to the recipient of the first amount of payment 11.

Moreover, the paying 60 of the second amount of payment 51 may be billed to a currency account or a portfolio of the user.

In order to recapitulate the above described embodiments of the present invention one can state:
The claimed invention allows for providing a device 100 for a vehicle 200, wherein the device is able to determine a best-to-use currency, based on an initial currency for a service, which has to be paid and taking into account an user-based currency of the user of the vehicle, respectively, user of the service. Such a best-to-use currency makes use of a decentralized and distributed digital ledger hash-tree currency, which allows for payments without the use of bank accounts even without transfer fees charged to the user of the vehicle. With this, a payment for a service is fair to all users of the service, without any limitations to the currency in which the service is accounted/billed and without limitations to the standard currency used by the user of the service. This is, as independently which discrepancy may arise between the billed currency and the standard currency of the user, the device determines an opportune currency, respectively a best-to-use currency, which has no such limitations or additional fees. With this, charges for services will be transparent to anyone using such services. Moreover, this may increase the acceptance of services, which may arise with new generation of vehicle-uses of people in a globalized world, like for example car-sharing services, as well as it may simplify the use of such services. An other advantage is, that such a device is ready, even for future coming electronic money systems, as it is likely, that such future money systems will be based on a decentralized and distributed digital ledger hash-tree protocol, which solves the double spending problem.

### List of reference signs

- 10: determining a first amount of payment
- 11: first amount of payment
- 12: initial currency
- 20: determining a recipient
- 21: recipient
- 30: determining an user-based currency
- 31: user-based currency
- 40: determining an opportune currency
- 41: opportune currency
- 42: opportunity criterion
- 43: set of currency-based cost parameters
- 50: calculating a second amount of payment / transferring calculation of the first amount of payment in the initial currency, into a second amount of payment in the opportune currency
- 51: second amount of payment
- 60: paying of the second amount of payment
- 100: device for payment of vehicle based costs
- 110: amount of payment specification unit
- 120: payment recipient specification unit
- 130: user currency specification unit
- 140: opportune currency determination device
- 150: payment unit
- 160: recipient information reception unit
- 170: user interface unit
- 180: mobile data connection unit
- 200: vehicle

## Claims

1. A device (100) for payment of vehicle based costs, the device (100) comprising:
- an amount of payment specification unit (110), for specifying a first amount of payment (11) in an initial currency (12) for a liable-to-pay-costs vehicle based action of the vehicle (200),
- a payment recipient specification unit (120), for specifying a recipient (21) of the first amount of payment (11),
- an user currency specification unit (130), for specifying an user-based currency (31) for an user of the vehicle (200),
- an opportune currency determination device (140), for determining an opportune currency (41), wherein the currency determination device (140) is adapted for:
- determining (40) the opportune currency (41), based on an opportunity criterion (42), wherein the opportunity criterion (42) comprises a minimization of monetary costs for the first amount of payment (11), based on the user-based currency (31), and wherein determining (40) the opportune currency (41) is further based on a set of currency-based cost parameters (43), the opportune currency (41) comprising a decentralized and distributed digital ledger hash-tree currency, and
- determining (50) the second amount of payment (51) based on the first amount of payment (11), wherein the second amount of payment (51) is accounted in the opportune currency (41), and
- a payment unit (150), for paying (60) of the second amount of payment (51) to the recipient (21) of the first amount of payment (11).

2. The device (100) as set forth in claim 1, wherein determining (40) the opportune currency (41) is based on an objective function, and
wherein the objective function comprises the opportunity criterion (42) as an objective parameter and the set of currency-based cost parameters (43) and a set of decentralized and distributed digital ledger hash-tree currencies as input parameters.

3. The device (100) as set forth in claim 2, wherein the device (100) moreover comprises:
- a recipient information reception unit (160), for receiving an adaptation information from the recipient (21) of the first amount of payment (11), wherein the adaptation information comprises an input parameter for the objective function, for adaptation of at least one distributed digital ledger hash-tree currency from the set of decentralized and distributed digital ledger hash-tree currencies.

4. The device (100) as set forth in any of the preceding claims, wherein
the objective function comprises an optimization function, preferably based on a cost minimization optimization function.

5. The device (100) as set forth in any of the preceding claims, wherein
the recipient (21) of the first amount of payment (11) is at least part of a node of the decentralized and distributed digital ledger hash-tree currency of the opportune currency (41).

6. The device (100) as set forth in any of the preceding claims, wherein
the paying of the second amount of payment (51) to the recipient (21) of the first amount of payment (11) is confirmable by a node of the decentralized and distributed digital ledger hash-tree currency of the opportune currency (41).

7. The device (100) as set forth in any of the preceding claims, wherein
the device (100) is an embedded device, optimized for a use in an electrical energy minimized vehicle environment.

8. The device (100) as set forth in any of the preceding claims, wherein
the opportune currency determination device (140) comprises a computing unit, optimized for a quick and reliable computing for determining (40) the opportune currency (41).

9. The device (100) as set forth in claim 8, wherein the computing unit is moreover optimized for a low electrical energy consumption.

10. The device (100) as set forth in any of the preceding claims, wherein the device (100) moreover comprises:
- an user interface unit (170), for interaction of the user of the vehicle with the device (100) for payment of vehicle based costs.

11. The device (100) as set forth in any of the preceding claims, wherein the device (100) moreover comprises:
- a mobile data connection unit (180), for connecting the device (100) for payment of vehicle based costs with a backend comprising decentralized and distributed digital ledger hash-tree currency information and/or a backend of the recipient (21) of the first amount of payment (11).

12. The device (100) as set forth in any of the preceding claims, wherein
the device (100) allows for an operating temperature from -15 °C to +75 °C, preferably from -25 °C to +85 °C, more preferably from -40 °C to +85 °C, most preferably from -40 °C to +125 °C.

13. A vehicle (200), comprising a device (100) for payment of vehicle based costs of the vehicle, as of claims 1 to 12.

14. A method for a payment of vehicle based costs, the method comprising:
- determining (10) a first amount of payment (11) for a liable-to-pay-costs vehicle based action, wherein the first amount of payment (11) is accounted in an initial currency (12),
- determining (20) a recipient (21) of the first amount of payment (11),
- determining (30) an user-based currency (31) for an user of the vehicle, and
- determining (40) an opportune currency (41), for the first amount of payment (11),
wherein determining (40) the opportune currency (41) is based on an opportunity criterion (42), wherein the opportunity criterion (42) is a minimization of monetary costs for the first amount of payment (11), based on the user-based currency (31),
wherein determining (40) the opportune currency (41) is further based on a set of currency-based cost parameters (43), and
wherein the opportune currency (40) comprises a decentralized and distributed digital ledger hash-tree currency,
- calculating (50) a second amount of payment (51) based on the first amount of payment (11), wherein the second amount of payment (51) is accounted in the opportune currency (41), and
- paying (60) of the second amount of payment (51) to the recipient of the first amount of payment (11).

15. The method as set forth in claim 14, wherein
the currency account of the user comprises a currency account in the user-based currency (31), in the opportune currency (41) or in another decentralized and distributed digital ledger hash-tree currency.

16. A computer program product comprising
machine readable instructions stored on machine readable media, for a device as of claims 1 to 12 and/or for a vehicle (200) as of claim 13.

17. A machine readable media comprising
a computer program product as of claim 16.
